# FASCICULE DE BREVET EUROPEEN

(11) **EP 3 030 408 B1**
(45) Date de publication et mention de la délivrance du brevet: **12.12.2018**
(21) Numéro de dépôt: 14752918.4
(22) Date de dépôt: 26.06.2014
(51) Int. Cl.: B29D 30/06, B29D 30/72, B29K 105/00, B29C 33/30

(54) **MOULE POUR PNEUMATIQUE COMPORTANT UN INSERT ANNULAIRE AVEC RAINURE CONCENTRIQUE**
REIFENFORM MIT EINEM RINGFÖRMIGEN EINSATZ MIT EINER KONZENTRISCHEN NUT
TIRE MOULD PROVIDED WITH AN ANNULAR INSERT HAVING A CONCENTRIC GROOVE

(30) Priorité: 05.08.2013 FR 1301877
(43) Date de publication de la demande: 15.06.2016
(73) Titulaire: Compagnie Générale des Etablissements Michelin, 63000 Clermont-Ferrand (FR)
(72) Inventeur: VILLENEUVE, Bernard, F-63040 Clermont-Ferrand Cedex 9 (FR); GOMET, Christian, F-63040 Clermont-Ferrand Cedex 9 (FR); DEAN, David, F-63040 Clermont-Ferrand Cedex 9 (FR)
(74) Mandataire: Demaure, Pierre-Yves
(86) Numéro de dépôt international: PCT/IB2014/001208
(87) Numéro de publication internationale: WO 2015/019136

(56) Documents cités:
- WO-A1-02/085595
- WO-A1-2009/007790
- DE-A1- 3 046 572
- DE-A1-102007 005 455
- GB-A- 2 341 339
- US-A- 1 632 310
- US-A- 2 296 016
- US-A- 4 547 139
- US-A- 5 288 449
- US-A- 5 643 519
- US-A1- 2004 032 053
- US-A1- 2011 180 200

## Description

### DOMAINE TECHNIQUE DE L'INVENTION

La présente invention concerne les moules pour pneumatiques. Plus particulièrement, elle se rapporte au moulage de protubérances sur les flancs de ces pneumatiques.

### ETAT DE LA TECHNIQUE ANTERIEURE

On connaît des pneumatiques pourvus d'éléments de garniture posés sur les flancs. Par exemple, le document FR1266628 divulgue un pneumatique pour avion décollant à très haute vitesse, conçu pour éviter les projections d'eau et comportant sur au moins un flanc un profilé modifiant la section usuelle, c'est-à-dire ayant une section à peu près triangulaire.

Le document EP1048489 divulgue un pneumatique comportant des bourrelets, des flancs et un sommet comportant une armature de renforcement. Pour dévier le flux d'eau éjecté latéralement par ce pneumatique au cours d'un roulage sur sol recouvert d'eau, on dispose sur au moins un des flancs une protubérance limitée par une paroi supérieure radialement à l'extérieur et une paroi inférieure radialement à l'intérieur.

La réalisation de ces protubérances implique des mises en oeuvre particulières des éléments des moules prévus pour le moulage et la vulcanisation. En outre, en cas de changement dimensionnel et/ou de profil d'une protubérance, il peut s'avérer nécessaire de changer tout le moule ou au moins une des coquilles, à un coût sensiblement important.

Le document WO02085595 divulgue un procédé de dépôt d'au moins un mélange de caoutchouc cru coloré formant un motif contrastant sur la surface extérieure d'un pneumatique, comprenant les étapes suivantes: préparer une ébauche du pneumatique cru à mouler, comportant tous les constituants sauf le ou les mélanges de caoutchouc coloré; déposer le ou les caoutchouc(s) colorés dans au moins une cavité formée sur un insert amovible, chaque cavité ayant la forme générale du motif à mouler et présentant un volume total V0, le volume total de caoutchouc coloré V1 non vulcanisé placé dans chaque cavité étant inférieur au volume V0; montage de l'insert dans un logement approprié prévu sur la surface de moulage du moule du pneumatique; engager l'ébauche de pneumatique à l'intérieur du moule; mouler et vulcaniser le pneumatique. Le document décrit des motifs typiquement de forme ronde, carrée, rectangulaire, etc, occupant une zone angulaire restreinte du flanc.

Le document DE3046572 décrit un procédé permettant l'insertion d'un code, une indication, lettrage ou signe de couleur sur le flanc. Cette inscription n'occupe qu'une zone angulaire restreinte du flanc, WO 2009/007790 A1 divulgue un moule pour la vulcanisation et le moulage d'un pneumatique selon le préambule de la revendication 1.

Il existe donc un besoin de proposer une solution permettant la mise en oeuvre de moules bien adaptés pour les pneumatiques pourvus de telles protubérances.

### EXPOSE DE L'INVENTION

Un premier objet de l'invention consiste à prévoir un moule spécifiquement adapté pour le moulage de pneumatiques pourvus d'au moins une protubérance en zone de flanc.

Un autre objet de l'invention consiste à prévoir un moule pour pneumatique pourvu d'une portion de flanc avec une protubérance d'une forme donnée, susceptible de changer ou d'évoluer pendant la durée de vie du produit ou pour un produit voisin.

Encore un autre objet de l'invention consiste à prévoir un moule pour pneumatique avec protubérance, rendant l'opération de démoulage la plus simple possible.

Encore un autre objet de l'invention consiste à prévoir un moule pour pneumatique avec protubérance, rendant l'opération de démoulage sans risque d'endommager la protubérance.

Pour ce faire, l'invention prévoit un moule pour la vulcanisation et le moulage d'un pneumatique, ce pneumatique comprenant une bande de roulement délimitée par deux flancs, le moule comprenant une couronne destinée au moulage de la bande de roulement du pneumatique et deux coquilles pour le moulage des flancs, le moule comprenant une rainure annulaire s'étendant en creux dans une des coquilles et un insert logé dans la rainure, cet insert étant annulaire et comportant au moins une rainure également annulaire, concentrique à l'insert et pourvue d'une section diminuant dans la profondeur de la rainure, ladite rainure libérant le volume requis pour former une protubérance sur le flanc du pneumatique produit au moyen dudit moule.

Grâce à une telle architecture, le moule selon l'invention permet d'isoler les éléments permettant de mouler la protubérance du flanc des autres éléments du flanc tels que le profil général du flanc, le marquage, etc. Ainsi, en cas de modification architecturale ou dimensionnelle de la protubérance, il est possible de changer uniquement l'insert, tout en conservant les autres éléments du moule non impactés par les changements. On obtient une souplesse dans la préparation des moules avec des possibilités d'évolutivité, à des coûts très avantageux. Le seul changement d'un insert peut également permettre des gains de temps et de productivité par rapport à un remplacement de moule complet.

Dans un autre mode de réalisation particulier, l'insert est formé de plusieurs parties d'insert positionnées les unes à la suite des autres dans la rainure annulaire.

L'invention propose ainsi de fabriquer un insert annulaire en plusieurs parties. Ce mode de réalisation permet en outre de faciliter la réalisation de l'insert. En outre, comme chaque partie d'insert présente des dimensions limitées, leur ajustement à la rainure dans la coquille est facilité. De plus, en cas de modification de profil et/ou de dimension d'une protubérance sur une portion angulaire limitée du flanc du pneumatique, seules les parties concernées par ces modifications sont remplacées. Il n'est donc pas nécessaire de remplacer l'ensemble de l'insert comme dans l'art antérieur.

**Dans** un autre mode de réalisation, au moins une partie d'insert est réalisée par frittage laser. Cette partie d'insert comporte tout ou partie de la rainure de l'insert.

Le procédé du frittage laser est un procédé qui consiste à construire une pièce couche par couche en superposant successivement des couches de poudre et en fusionnant sélectivement cette poudre. Ce procédé peut être assisté par ordinateur ce qui permet de construire des pièces complexes. En utilisant ce procédé de frittage pour réaliser de parties d'insert, il est possible de former sur ces parties d'insert des moyens de marquage complexes permettant d'améliorer la visibilité du marquage sur un flanc de pneumatique.

Dans un autre mode de réalisation, l'insert comprend plusieurs rainures.

Dans un autre mode de réalisation, chaque partie d'insert comporte des surfaces de contact servant à interfacer avec des parties d'insert adjacentes. Au moins deux parties d'insert sont reliées entre elles au niveau d'une zone de leur surface de contact, cette liaison étant apte à être brisée en vue de désolidariser les deux parties d'insert.

En liant tout ou partie des différentes parties d'insert entre elles, il est possible de positionner en une seule fois l'ensemble de l'insert annulaire dans le moule.

Lors d'une opération de changement d'une des parties d'insert, il suffit alors de briser les liaisons la retenant aux autres parties d'insert pour l'extraire du moule et la remplacer par une autre partie d'insert idoine.

Dans un autre mode de réalisation, la coquille comprend une ouverture traversante, telle qu'un alésage, s'étendant entre l'insert et l'extérieur de la coquille. Ce type d'agencement permet d'introduire un moyen pour faire sortir la coquille lorsque celle-ci est fixée à force dans la rainure. En variante, plusieurs ouvertures sont réparties le long de la circonférence de l'insert, par exemple une par partie d'insert.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement une vue en coupe dans un plan méridien d'une partie d'un moule conforme à l'invention ;
- la figure 2 représente schématiquement une vue en perspective d'un insert annulaire adapté au moule de la figure 1 et réalisé selon un premier mode de réalisation de l'invention ;
- la figure 3 représente schématiquement une face d'une partie d'insert de la figure 2 liée à une autre partie d'insert ;
- la figure 4 représente schématiquement une vue en coupe dans un plan méridien d'une partie d'un moule conforme à l'invention, comportant une ouverture traversante facilitant l'extraction de l'insert.

Dans la description qui va suivre, des éléments sensiblement identiques ou similaires seront désignés par des références identiques.

### DESCRIPTION DETAILLEE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

Par « moule », on entend un ensemble d'éléments de moule séparés qui, par rapprochement relatif, permettent de délimiter un espace de moulage toroïdal 20 pour la vulcanisation et le moulage d'un pneumatique.

Par « plan équatorial », on entend un plan perpendiculaire à un axe de révolution du moule et séparant ce moule en deux 1/2 moules identiques.

Par « plan méridien », on entend un plan contenant l'axe de révolution du moule.

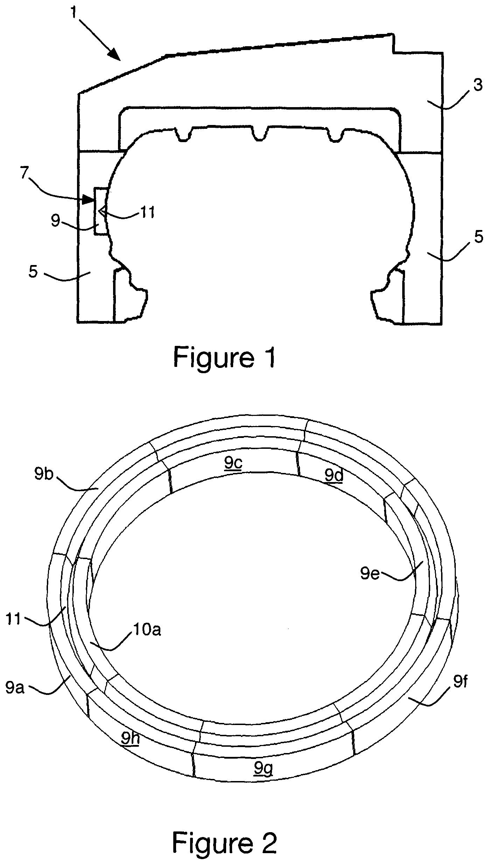

Comme on le voit à la figure 1, le moule 1 comprend une couronne 3 destinée au moulage de la bande de roulement d'un pneumatique et deux coquilles 5 pour le moulage des flancs. Le moule 1 comprend également une rainure annulaire 7 s'étendant le long de la circonférence du flanc, en creux dans une des coquilles 5. Un insert 9, est monté de façon amovible dans la rainure. Une rainure 11 est prévue du côté flanc de l'insert. Cette rainure 11 libère le volume requis pour former une protubérance sur le flanc du pneumatique produit au moyen de ce moule. Le profil et les dimensions de la rainure sont prévus en fonction du profil et des dimensions de la protubérance du pneumatique à mouler.

Tel que montré dans l'exemple de réalisation de la figure 2, l'insert 9 est avantageusement formé de plusieurs parties d'insert 9a à 9h alignées angulairement les unes à la suite des autres de façon à former un anneau aux dimensions adaptées pour insertion dans la rainure annulaire 7. Sur cette figure, on observe aisément tant le profil que l'emplacement de la rainure 11 prévue dans l'insert 9. La rainure 11 et l'insert 9 sont avantageusement concentriques.

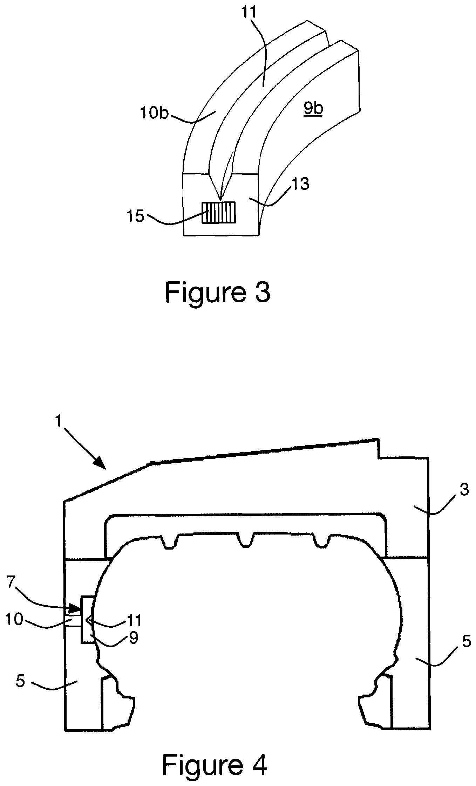

La figure 3 montre une vue en élévation d'une face latérale de la partie d'insert 9b, vu depuis la partie 9a. L'interface entre les deux sections 9a et 9b produit une zone de jonction avec une surface de contact 13.

Un pont 15, ou élément de jonction, permet de fixer entre elles deux parties voisines de l'insert 9. Dans cet exemple, le pont 15 est prévu dans la zone centrale de surface de contact 13. En variantes, plusieurs ponts peuvent être prévus. Le profil et la surface des ponts peuvent varier selon les modes de réalisation. Les ponts sont avantageusement prévus lors de la fabrication de l'insert, en particulier dans le cas où l'insert est réalisé par frittage laser. Pour changer une partie d'insert, le ou les ponts reliant les parties concernées sont cassés ou coupés. La section des ponts est avantageusement prévue et dimensionnée pour faciliter cette opération. En effet, même si les parties sont séparables par cassure des ponts lorsque l'insert est hors du moule, le montage de l'insert dans le moule, de préférence avec serrage, confère une rigidité suffisante pour pouvoir effectuer les opérations de moulage sans risque de cassure de ponts. Par ailleurs, l'insertion de l'insert dans la rainure de coquille confère un appui solide permettant de bien résister aux efforts de moulage.

Dans la variante de réalisation présentée à la figure 4, un orifice traversant 10, tel qu'un alésage, assure une communication entre l'extérieur du moule et l'intérieur du moule. Cet orifice permet d'enfoncer un outil de démoulage depuis l'extérieur du moule pour faciliter l'extraction de l'insert, soit en totalité ou pour une ou plusieurs parties d'insert. Plusieurs orifices 10 peuvent être répartis angulairement le long de la circonférence de la coquille.

Les Figures et leurs descriptions faites ci-dessus illustrent l'invention plutôt qu'elles ne la limitent. En particulier, l'invention et ses différentes variantes viennent d'être décrites en relation avec un exemple particulier dont la rainure est en forme de « V » rétrécissant en allant en s'éloignant du flanc du pneumatique à mouler.

Néanmoins, il est évident pour un homme du métier que l'invention peut être étendue à d'autres modes de réalisation dans lesquels en variantes, on prévoit une forme différente, telle que une forme de « U » ou de « W » par exemple. Encore selon d'autres variantes de réalisations, plusieurs rainures concentriques peuvent être prévues sur l'insert.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Moule (1) pour la vulcanisation et le moulage d'un pneumatique, ce pneumatique comprenant une bande de roulement délimitée par deux flancs, le moule comprenant une couronne (3) destinée au moulage de la bande de roulement du pneumatique et deux coquilles (5) pour le moulage des flancs, le moule comprenant une rainure annulaire (7) s'étendant en creux dans une des coquilles (5) et un insert (9) logé dans la rainure, **caractérisé en ce que** cet insert (9) est annulaire et comporte au moins une rainure (11) également annulaire, concentrique à l'insert et pourvue d'une section diminuant dans la profondeur de la rainure, ladite rainure (11) libérant le volume requis pour former une protubérance sur le flanc du pneumatique produit au moyen dudit moule.

2. Moule selon la revendication 1, **caractérisé en ce que** l'insert comprend plusieurs rainures.

3. Moule selon l'une des revendications 1 ou 2, **caractérisé en ce que** l'insert (9) est formé de plusieurs parties d'insert (9a-9h) positionnées les unes à la suite des autres dans la rainure annulaire (7).

4. Moule selon l'une quelconque des revendications 1 à 3, **caractérisé en ce qu'**au moins une partie d'insert (9a) est réalisée par frittage laser, ladite partie d'insert comportant tout ou partie de la rainure (11) de l'insert (9).

5. Moule selon l'une quelconque des revendications 1 à 4, chaque partie d'insert comportant des surfaces de contact (13) pour le contact avec des parties d'insert adjacentes, **caractérisé en ce qu'**au moins deux parties d'insert (9e, 9f) sont reliées entre elles au niveau d'une zone (15) de leur surface de contact, cette liaison étant apte à être brisée en vue de désolidariser les deux parties d'insert (9e, 9f).

6. Moule selon l'une quelconque des revendications 1 à 5, **caractérisé en ce que** la coquille (5) comprend une ouverture traversante (10) s'étendant entre l'insert (9) et l'exterieur de la coquille(5)

## Patentansprüche

1. Form (1) zum Vulkanisieren und Formen eines Luftreifens, wobei der Luftreifen eine durch zwei Flanken begrenzte Lauffläche umfasst, wobei die Form einen Kranz (3), der zum Formen der Lauffläche des Luftreifens bestimmt ist, und zwei Schalen (5) zum Formen der Flanken umfasst, wobei die Form eine ringförmige Rille (7), die sich vertieft in einer der Schalen (5) erstreckt, und einen in der Rille aufgenommenen Einsatz (9) umfasst, **dadurch gekennzeichnet, dass** dieser Einsatz (9) ringförmig ist und mindestens eine ebenfalls ringförmige Rille (11) aufweist, die zum Einsatz konzentrisch und mit einem Querschnitt versehen ist, der in der Tiefe der Rille abnimmt, wobei die Rille (11) den zum Bilden eines Vorsprungs an der Flanke des mittels der Form hergestellten Luftreifens erforderlichen Raum schafft.

2. Form nach Anspruch 1, **dadurch gekennzeichnet, dass** der Einsatz mehrere Rillen umfasst.

3. Form nach einem der Ansprüche 1 oder 2, **dadurch gekennzeichnet, dass** der Einsatz (9) aus mehreren Einsatzteilen (9a - 9h) gebildet ist, die nacheinander in der ringförmigen Rille (7) positioniert sind.

4. Form nach einem der Ansprüche 1 bis 3, **dadurch gekennzeichnet, dass** mindestens ein Einsatzteil (9a) durch Lasersintern ausgeführt ist, wobei der Einsatzteil die gesamte oder einen Teil der Rille (11) des Einsatzes (9) aufweist.

5. Form nach einem der Ansprüche 1 bis 4, wobei jeder Einsatzteil Kontaktflächen (13) zum Kontakt mit benachbarten Einsatzteilen aufweist, **dadurch gekennzeichnet, dass** mindestens zwei Einsatzteile (9e, 9f) an einer Zone (15) ihrer Kontaktfläche miteinander verbunden sind, wobei diese Verbindung zerstört werden kann, um die beiden Einsatzteile (9e, 9f) zu trennen.

6. Form nach einem der Ansprüche 1 bis 5, **dadurch gekennzeichnet, dass** die Schale (5) eine Durchgangsöffnung (10) umfasst, die sich zwischen dem Einsatz (9) und der Außenseite der Schale (5) erstreckt.

## Claims

1. Mould (1) for vulcanizing and moulding a tyre, this tyre comprising a tread delimited by two sidewalls, the mould comprising a ring (3) intended for moulding the tread of the tyre and two shells (5) for moulding the sidewalls, the mould comprising an annular groove (7) extending in a recessed manner in one of the shells (5) and an insert (9) housed in the groove, **characterized in that** this insert (9) is annular and has at least one groove (11) which is likewise annular, is concentric with the insert and provided with a section that decreases in the depthwise direction of the groove, said groove opening up the volume required to form a protuberance on the sidewall of the tyre produced by means of this mould.

2. Mould according to Claim 1, **characterized in that** the insert comprises a plurality of grooves.

3. Mould according to either of Claims 1 and 2, **characterized in that** the insert (9) is formed from a plurality of insert parts (9a-9h) that are positioned one after another in the annular groove (7).

4. Mould according to any one of Claims 1 to 3, **characterized in that** at least one insert part (9a) is produced by laser sintering, said insert part having all or part of the groove (11) in the insert (9).

5. Mould according to any one of Claims 1 to 4, wherein each insert part has contact surfaces (13) for contact with adjacent insert parts, **characterized in that** at least two insert parts (9e, 9f) are connected together in a region (15) of their contact surface, this connection being able to be broken in order to separate the two insert parts (9e, 9f).

6. Mould according to any one of Claims 1 to 5, **characterized in that** the shell (5) comprises a through-opening (10) extending between the insert (9) and the outside of the shell (5).
